# EUROPEAN PATENT SPECIFICATION

(11) **EP 2 594 350 B1**
(45) Date of publication and mention of the grant of the patent: **07.09.2016**
(21) Application number: 11806643.0
(22) Date of filing: 30.06.2011
(51) Int. Cl.: B21K 3/04, B21D 53/78, B30B 13/00, F02B 37/24, F02B 39/00

(54) **METHOD FOR MANUFACTURING PRESS PRODUCT INCLUDING FLAT PART AND ROD PART IN INTEGRATED MANNER, AND METHOD FOR MANUFACTURING VARIABLE VANE FOR VGS-TYPE TURBO CHARGER BY APPLYING THE SAME**
VERFAHREN ZUR HERSTELLUNG EINES PRESSPRODUKTS MIT EINEM INTEGRIERTEN FLACHEN TEIL UND EINEM STANGENTEIL SOWIE VERFAHREN ZUR HERSTELLUNG EINER VARIABLEN SCHAUFEL FÜR EINEN VGS-TURBOLADER UNTER ANWENDUNG DES VERFAHRENS
PROCÉDÉ DE FABRICATION DE PRODUIT DE PRESSE POURVU DE PIÈCE PLATE ET DE PIÈCE TIGE SOLIDAIRES, ET PROCÉDÉ DE FABRICATION D'AUBE À INCIDENCE VARIABLE POUR TURBOSOUFFLANTE DE TYPE VGS EN APPLICANT CE PROCÉDÉ

(30) Priority: 15.07.2010 JP 2010160388
(43) Date of publication of application: 22.05.2013
(73) Proprietor: Akita Fine Blanking Co., Ltd., Shimada-shi Shizuoka 427-0103 (JP)
(72) Inventor: AKITA, Takahiro, Shimada-shi Shizuoka 427-0103 (JP)
(74) Representative: Klunker . Schmitt-Nilson . Hirsch
(86) International application number: PCT/JP2011/065082
(87) International publication number: WO 2012/008313

(56) References cited:
- JP-A- 2000 301 283
- JP-A- 2003 049 660
- JP-A- 2007 023 840

## Description

### Technical Field

The present invention relates to a method for manufacturing a press product that includes, in an integrated manner, a flat part and a rod part with a diameter greater than the thickness of the flat part, and particularly relates to a novel manufacturing method in which a rod part thicker than the thickness of a blank material can be efficiently formed into a desired shape by incorporating a thickening step in the processing while blanking on the basis of a thin flat part. Here, a press product including a flat part and a rod part in an integrated manner can be a variable vane installed in a turbo charger used in an automobile engine or the like, where a vane part and a shaft part of the variable vane correspond to the flat part and the rod part of the press product, respectively.

### Background Art

A turbo charger is known as a supercharger used as a means for improving power output and performance of an automobile engine, for example. The turbo charger uses exhaust energy of the engine to drive a turbine, the output of which then rotates a compressor so that the engine is supercharged to have more air fed into it than fed into it by the natural aspiration. The turbo charger hardly drives the exhaust turbine when the engine runs at low speed at which the flow rate of the exhaust gas is reduced. Therefore, it has been inevitable for the engine running at up to a high speed region to experience the slow-moving feeling until the turbine rotates efficiently and a subsequent time, or what is called a turbo lag, required for the engine to reach a full-running state. Moreover, there has been a disadvantage in a diesel engine inherently running at low speed that the turbo effect cannot be obtained easily.

Accordingly, there has been developed a VGS-type turbo charger (a VGS unit) that efficiently operates from a low speed region. That is, even when the engine runs at low speed, the VGS-type turbo charger can achieve high power output by throttling the exhaust gas flowing at a reduced flow rate by using a variable vane (blade) to increase the velocity of the exhaust gas and increase the work of the exhaust turbine. As a result, the VGS unit has additionally required a variable mechanism or the like for the variable vane, thereby having caused the form or the like of a peripheral component to be more complex compared to a conventional one.

The applicant has repeatedly conducted diligent research and development with regard to the variable vane and the variable mechanism therefor and applied for a number of patents (refer to Patent Literatures 1 to 3, for example). Disclosed in Patent Literatures is a method for manufacturing a variable vane in which a blank material is punched out from a sheet metal having a fixed thickness and formed into a desired shape by a die forging press. In the Patent Literatures, a progressive press (progressive processing) is adopted in which the sheet metal is basically passed along a plurality of steps without separating the blank material from the sheet metal. As a result, a mass production system for the aforementioned variable vane has been realized in the Patent Literatures.

It has been found in the Patent Literatures, however, that there is still room for development in terms of the following point. The aforementioned variable vane includes the vane part for appropriately throttling the exhaust gas, the shaft part to be a turning shaft for the vane part, and a brim part provided at the boundary between the vane part and the shaft part, where the shaft part has a greater diameter than the vane part, and the brim part has an even greater diameter than the shaft part. That is, the brim part has the greatest diameter in the variable vane but is only a part of the whole variable vane. Thus, in the Patent Literatures, the thickness of the sheet metal to be a starting material is set on the basis of the shaft part thinner than the brim part (but thicker than the vane part), and the brim part is bulged out by partially stopping the material flow when molding the shaft part and the vane part. It has been considered an extremely popular method and a common technical knowledge in die forging to set the thickness of the sheet metal on the basis of a part that is relatively thick among respective parts of a finished product.

However, the applicant has reached the present invention by radically reviewing such common technical knowledge. That is, the applicant has reached the present invention from an idea that, by setting the thickness of the sheet metal on the basis of a thin part (the vane part in this case) among respective parts of a finished product, the thickness of the sheet to be processed can be decreased to not only improve the material yield but also reduce the die load at the time of press processing, thereby making it possible to improve the productivity, reduce the cost, and thus further realize the mass production system.

### Citation List

### Patent Literature

Patent Literature 1: Japanese Unexamined Patent Application Publication No. 2007-23840
Patent Literature 2: Japanese Unexamined Patent Application Publication No. 2007-23841
Patent Literature 3: Japanese Unexamined Patent Application Publication No. 2007-23843

### Summary of Invention

### Technical Problem

In consideration of the aforementioned background, the present invention has attempted to develop a novel manufacturing method by which the variable vane (the press product) can be manufactured at a high quality level stably at all times along with the mass productivity and the economic efficiency by setting the thickness of the sheet metal to be the starting material on the basis of not the shaft part (the rod part) that is relatively thick but the vane part (the flat part) that is the thinnest among the parts of the variable vane (the press product).

### Solution to Problem

According to a first aspect of the present invention, there is provided a method for manufacturing a press product that includes, in an integrated manner, a flat part and a rod part having a diameter greater than a thickness of the flat part, and the method includes steps of: preparing a preformed material by blanking a blank material, from a strip material having a roughly fixed thickness smaller than the diameter of the rod part but thicker than the thickness of the flat part, to be the preformed material being an original form of the press product, the blank material being blanked in a punching direction by a width greater than the thickness of the strip material in order to have enough volume to obtain a target press product; forging the rod part in which the rod part is formed into a desired shape while mainly thickening the rod part by interposing the preformed material between a pair of opposed dies and pressing mainly the rod part from a direction roughly orthogonal to the punching direction; and trimming the rod part in which a first unnecessary portion of the preformed material is trimmed, the first unnecessary portion hanging out of a product part as a result of the forging processing. The preformed material remains in contact with a part of the strip material to be passed along in progressive processing in which the steps of preparing the preformed material, forging the rod part, and trimming the rod part are performed, the step of forging the rod part is performed upon turning over the preformed material in a punching orientation by 90° with respect to the strip material and changing orientation of the flat part into a vertical direction, the preformed material having been blanked in the step of preparing the preformed material, and the subsequent step of trimming the rod part is also performed while the flat part is oriented in the vertical direction.

Along with the patentability of the first aspect of the present invention, the method for manufacturing a press product including a flat part and a rod part in an integrated manner according to a second aspect of the present invention, includes steps of, in addition to the steps of preparing the preformed material, forging the rod part, and trimming the rod part: forging the flat part in which mainly the flat part is formed into a desired shape by interposing the preformed material between a pair of opposed dies and pressing the preformed material from the punching direction, the preformed material having been processed in the step of trimming the rod part; and trimming the flat part in which a second unnecessary portion of the preformed material is trimmed, the second unnecessary portion hanging out of a product part as a result of the forging processing. The step of forging the flat part is performed while the preformed material is in the original punching orientation by turning back the preformed material by 90° with respect to the strip material, and the subsequent step of trimming the flat part is also performed while the preformed material is in the punching orientation.

According to a third aspect of the present invention, there is provided a method for manufacturing a variable vane to be installed in a VGS-type turbo charger, and the variable vane includes: a shaft part to be a turning center; and a vane part for practically regulating a flow rate of exhaust gas, and the VGS-type turbo charger allowing an engine to achieve high power output even when running at low speed by appropriately throttling relatively small amount of exhaust gas exhausted from the engine, amplifying velocity of the exhaust gas, rotating an exhaust turbine by using energy of the exhaust gas, and using a compressor directly connected to the exhaust turbine to feed more air into the engine than the air being fed by natural aspiration. The vane part and the shaft part of the variable vane correspond to the flat part and the rod part, respectively, according to the first or second aspect of the invention, and the variable vane is manufactured by the manufacturing method according to the first or second aspect of the present invention.

Along with the patentability of the third aspect of the present invention, in the method for manufacturing a variable vane installed in a VGS-type turbo charger according to a fourth aspect of the present invention, the variable vane is of a double-shaft type having a long shaft and a short shaft part on both sides of the vane part, and a brim part with a diameter greater than that of the shaft part is formed between the vane part and the shaft part.

### Advantageous Effects of Invention

The aforementioned problems can be solved by means of the configuration of the invention recited in each aspect of the present invention.

According to the first aspect of the present invention, a blank material (a preformed material) punched out into a laterally long state (a substantially horizontal state) is pressed from a direction substantially orthogonal to a punching direction, whereby a thin blank material (sheet metal) can be made thicker than the thickness thereof to form (mold) a rod part into a desired shape. The use of the thin sheet metal as the starting material also allows for improvement on the material yield, reduction of a load on a die, prevention of a complex die structure, and an increased degree of freedom in die designing. A suppressed compression ratio as a finished press product also allows it to be manufactured sufficiently by cold forging, whereby a cost can be reduced. Furthermore, the use of the thin sheet metal as the starting material allows material that has conventionally been unsuitable for press work to be applicable, thereby increasing the freedom of material selection.

According to the second aspect of the present invention, the flat part mainly can be molded into a precise shape by a step of forging a flat part and a step of trimming a flat part that are provided in addition to steps of preparing a preformed material, forging a rod part, and trimming a rod part. As for the rod part that is pressed from two directions, the punching direction and the direction substantially orthogonal thereto, the work hardening can be anticipated in a finished state. Such work hardening would be effective in decreasing the frictional resistance and improving the abrasion resistance or the like when the rod part is applied as a sliding part such as a rotational shaft.

There are limitations on processing the preformed material (the blank material) that remains in contact with a part of the sheet metal (a strip material) until the final separation, the limitations including a difficulty of processing an outer periphery of the preformed material, a difficulty of moving the preformed material during the processing, and the like. A difficulty also arises in matching a die in each processing stage, for example. However, the advantage of having the preformed material that remains in contact with a part of the sheet metal is that the press product of a relatively small size can be sent at high speed and that a mass production system for such press product would become more practical.

According to the third aspect of the present invention, the variable vane can be efficiently manufactured from the thin sheet metal at a high quality level stably at all times, thereby further ensuring the mass production of the variable vane.

According to the fourth aspect of the present invention, a double-shaft type variable vane is manufactured in which the shaft part is provided to both sides of the vane part and, at the same time, a brim part with a diameter greater than that of the shaft part is formed between the vane part and the shaft part. In order to form the brim part, the thickness (material) of the preformed material in the processing needs to be bulged out, which is an extremely difficult processing method but can be realized. That is, the material flow in the longitudinal direction of the shaft part needs to be regulated in order to form the brim part by padding, which is an extremely difficult type of manufacture but is realized. When a blank material is pressed by a pair of opposed dies in normal die forging, the material is freely spread to the surrounding to form a shape substantially in accordance with a cavity shape without regulating the material flow (direction) of the blank material caused by the pressing. The present invention however employs the contrary processing (plastic flow).

### Brief Description of Drawings

Fig. 1(a) is a perspective view showing an example of a VGS-type turbo charger incorporating a variable vane according to the present invention, and Fig. 1(b) is an exploded perspective view showing an example of an exhaust gas guide assembly.
Fig. 2 is a set of diagrams showing a front view, a left side view, and a right side view of the variable vane according to the present invention.
Fig. 3 is a schematic diagram showing a framework of progressive processing in which a strip material is fed to an opposed die of respective processing stages provided continuously.
Fig. 4 is a set of perspective views showing stepwise a processing step of a blanked preformed material until it is formed into a product (the variable vane).
Fig. 5 is a perspective view showing a state in which a long shaft part and a short shaft part of the preformed material are cut after a step of trimming a vane part.
Fig. 6 is a schematic diagram showing a state in which a shaft center of each shaft part is detected after end portions of both shaft parts are cut.
Fig. 7 is a schematic diagram showing a state in which a cutting tool is used to cut and form a shaft diameter, a slide step, and a vane width while retaining a drilled center position of the both shaft parts.

### Reference Sings List

1 variable vane (press product)
2 turbine frame
3 variable mechanism
1 variable vane (press product)
11 vane part (flat part)
11a front edge
11b rear edge
12 shaft part (rod part)
12a long shaft part
12b short shaft part
13 brim part
14 slide step
15 reference surface
16 guide-in portion
2 turbine frame
21 frame segment
22 holding member
23 flange part
23A flange part (small)
23B flange part (large)
24 boss
25 receiving hole
26 caulking pin
27 pin hole
3 variable mechanism
31 turning member
32 conveying member
32A driving element
32B passive element
33 ring
45 chucking
46 core holder
a unnecessary portion
b unnecessary portion
c unnecessary portion
h vane width
A exhaust gas guide assembly
G exhaust gas
L chord length
P1 step of preparing a preformed material
P2 step of forging a shaft part (step of forging a rod part)
P3 step of trimming a shaft part (step of trimming a rod part)
P4 step of forging a vane part (step of forging a flat part)
P5 step of trimming a vane part (step of trimming a flat part)
P6 cutting step
S strip material
T exhaust turbine
W preformed material
CT cutting tool
EM end mill
UC uncoiler
LV leveler

### Description of Embodiments

An embodiment for carrying out the present invention includes what is described in the embodiment below as well as various methods that can be improved within the technological concept of the present invention.

A variable vane 1 in a VGS-type turbo charger (a VGS unit) will be described below as an example of a press product according to the present invention. The variable vane 1 will be described while describing an exhaust gas guide assembly A of the VGS unit employing the variable vane 1. A method for manufacturing a press product (a method for manufacturing a variable vane) will be described thereafter.

### Embodiment

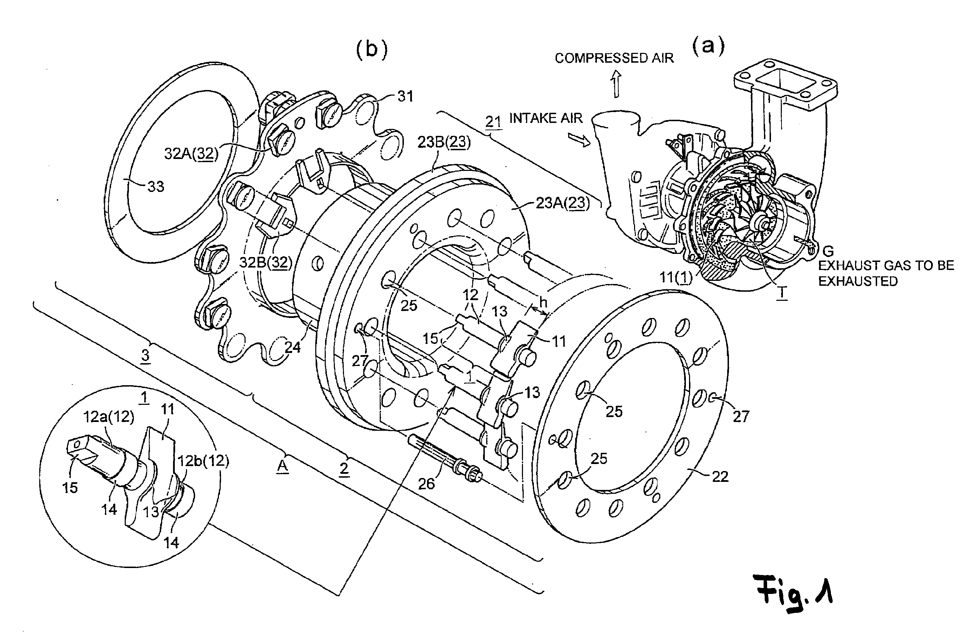

An exhaust gas guide assembly A is adapted to regulate a flow rate of exhaust gas by appropriately throttling exhaust gas G especially when an engine runs at low speed. As shown in an example in Figs. 1(a) and 1(b), the exhaust gas guide assembly A includes: a plurality of variable vanes 1 provided in an outer periphery of an exhaust turbine T to essentially set the flow rate of the exhaust gas; a turbine frame 2 for turnably holding the variable vane 1; and a variable mechanism 3 for turning the variable vane 1 by a fixed angle in order to appropriately set the flow rate of the exhaust gas G. Each component will be described below.

The variable vane 1 will be described first. As shown in an example in Figs. 1(a) and 1(b), the plurality of variable vanes 1 (roughly 10 to 15 units for one exhaust gas guide assembly A) is disposed in an arc along the outer periphery of the exhaust turbine T. Each of the variable vanes is turned by roughly the same degree to regulate the flow rate of the exhaust gas. The variable vane 1 includes a vane part 11 and a shaft part 12, which will be described below.

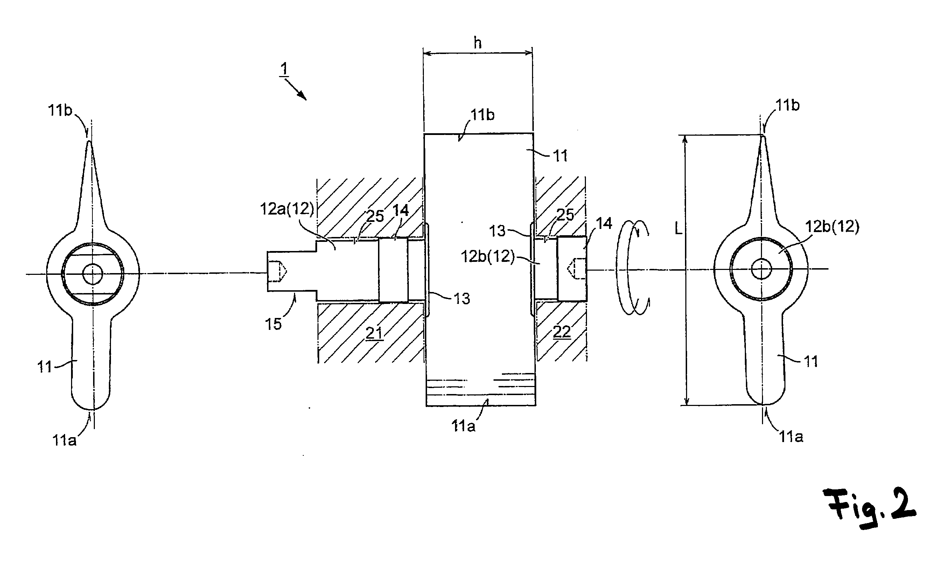

The vane part 11 is formed to have a fixed width in accordance with mainly the width of the exhaust turbine T. The cross section of the vane part in the width direction has a wing profile so that the exhaust gas G is effectively directed toward the exhaust turbine T. For convenience' sake, the width of the vane part 11 is referred to as a vane width h as shown in Fig. 1(b). As shown in Fig. 2, a thick end edge of the cross section of the vane part 11 having a wing profile is named as a front edge 11a, a thin end edge as a rear edge 11b, and a length from the front edge 11a to the rear edge 11b as a chord length L. Moreover, a brim part 13 having a somewhat greater diameter than that of the shaft part 12 is formed in a boundary part (a connection part) between the vane part 11 and the shaft part 12. A bottom surface (a bearing surface) of the brim part 13 is formed roughly on the same plane as the end surface of the vane part 11, the plane serving as a bearing surface when the variable vane 1 is installed to the turbine frame 2 and as a means to regulate a position in the width direction (the vane width h direction) of the exhaust turbine T.

On the other hand, the shaft part 12 is continuously and integrally formed with the vane part 11 and serves as a turning shaft for turning the vane part 11. The variable vane 1 in the present embodiment is what is called a center impeller type in which the shaft part 12 is formed on both sides of the vane part 11. For convenience' sake, the both shaft parts 12 are distinguished into a long shaft part 12a and a short shaft part 12b in association with the shaft length thereof when the both shaft parts are to be distinguishably shown. The variable vane 1 of the center impeller type is effective in terms of improving the operational stability (turn stability), the strength or the like of the variable vane 1 as compared to a variable vane of what is called a cantilever type in which the shaft part 12 is only formed on one side of the vane part 11.

Also formed partially on the long shaft part 12a and the short shaft part 12b is a slide step 14 with a diameter somewhat greater than the diameters of the both shaft parts. The slide step 14 comes in contact with a shaft bearing (a receiving hole 25 of the turbine frame 2 to be described later) of the turbine frame 2 when turning the variable vane 1 in order to suppress sliding resistance (frictional resistance) and achieve stable operation (turn) of the variable vane 1. Repeatedly used under a harsh environment of high-temperature/exhaust gas atmosphere, the variable vane 1 can be operated to open and close more stably by suppressing the sliding resistance by the slide step 14.

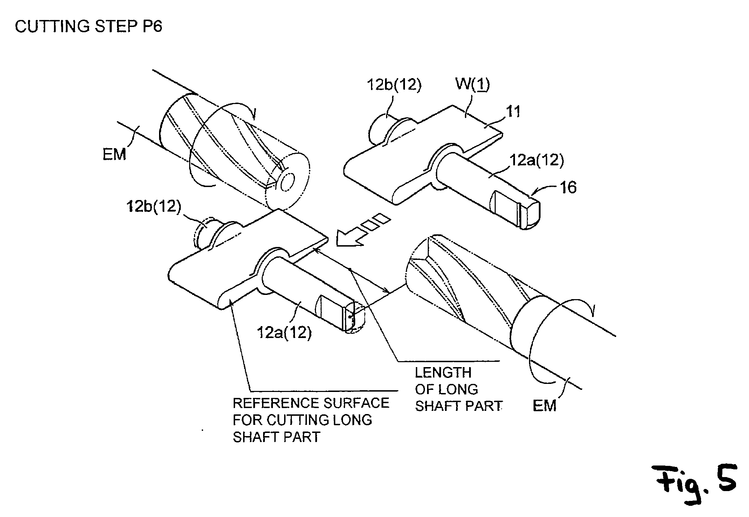

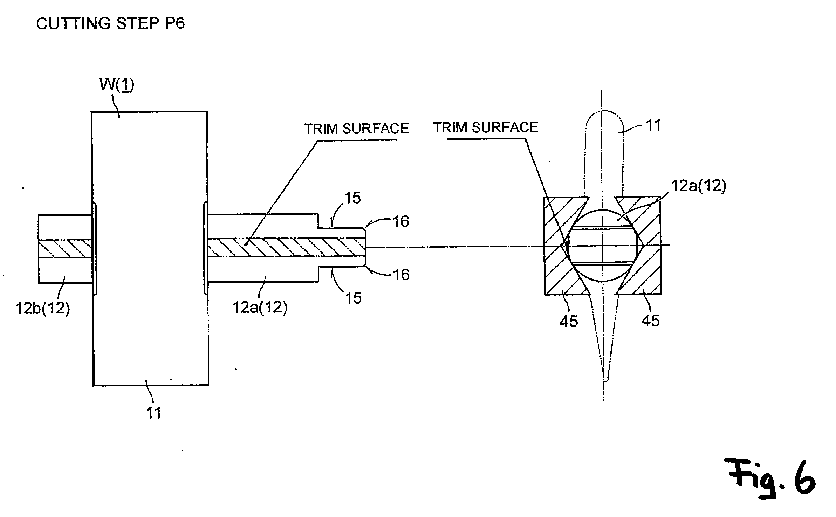

A reference surface 15 to be the reference for the attachment of the variable vane 1 is formed on a tip side of the long shaft part 12a. The reference surface 15 is, for example, caulked to the variable mechanism 3 to be described later and has a double surface structure formed by cutting off opposing portions of the shaft part 12 as shown in an example in Figs. 1 and 2. Although hardly noticeable, a guide-in portion 16 is formed at a tip of the reference surface 15 by slanting and tapering the opposing two surfaces as shown in an example in Figs. 5 and 6. The guide-in portion 16 serves as a guide when press fitting the long shaft part 12a to a passive element 32B to be described later.

For example, the variable vane 1 has a thickness of the front edge 11a of the vane part 11 of approximately 2.4 mm, the vane width h of approximately 7.1 mm, the chord length L of approximately 17.4 mm, a diameter of the bearing surface of the brim part 13 of approximately 6 mm, a diameter of the shaft part 12 of approximately 4.5 mm, and an opposing width of the reference surface 15 of approximately 2.5 mm.

The turbine frame 2 will now be described. The turbine frame 2 is configured as a frame member for turnably holding the plurality of variable vanes 1 (the vane parts 11) between a frame segment 21 and a holding member 22 as shown in an example in Fig. 1(b). The frame segment 21 includes a flange part 23 for receiving the long shaft part 12a of the variable vane 1, and a boss 24 to which the variable mechanism 3 to be described later is externally inserted. With such configuration, a plurality of receiving holes 25 is formed at equal intervals in the periphery of the flange part 23, the number of the receiving holes being the same as that of the variable vanes 1.

The holding member 22 is formed into a disk shape, a center part of which is open as shown in Fig. 1(b). The variable vane 1 of the present embodiment being the double-shaft type, the holding member 22 is also provided with the receiving holes 25 that are equally disposed for receiving the short shaft part 12b of the variable vane 1.

In order to turn the variable vane 1 (the vane part 11) interposed between the frame segment 21 and the holding member 22 smoothly at all times, the measurement therebetween is maintained at a substantially constant value (roughly the vane width h of the variable vane 1) by, for example, four caulking pins 26 provided in the outer periphery of the receiving hole 25. Here, a pin hole 27 is provided in the frame segment 21 and the holding member 22 for receiving the caulking pin 26.

In the present embodiment, the flange part 23 of the frame segment 21 includes a flange part 23A with a diameter approximately the same as that of the holding member 22 and a flange part 23B with a diameter somewhat greater than that of the holding member 22, the flange parts 23A and 23B being formed of the same member. When it is difficult to form the flange parts by the same member, for example, two separate flange parts having different diameters can be formed and joined thereafter by caulking or blazing.

The variable mechanism 3 will now be described. The variable mechanism 3 is provided on the outer peripheral side of the boss 24 of the turbine frame 2 to turn the variable vane 1 for regulating the flow rate of the exhaust gas. As shown in an example in Fig. 1(b), the variable mechanism 3 includes a turning member 31 for practically generating the turning for the variable vane 1 in the assembly and a conveying member 32 for conveying the turning to the variable vane 1. As shown in Fig. 1(b), the turning member 31 is substantially formed into a disk shape, a center part of which is open, and the conveying members 32 provided in the same number as that of the variable vanes 1 are equally disposed in the periphery of the turning members 31. The conveying member 32 includes a driving element 32A rotatably attached to the turning member 31 and a passive element 32B fixed to the reference surface 15 of the variable vane 1 by caulking or the like. Turning is conveyed while the driving element 32A and the passive element 32B are connected. Specifically, the driving element 32A having a square shape is rotatably pinned to the turning member 31, while the reference surface 15 of the variable vane 1 is press-fitted to the passive element 32B to be caulked. A roughly U-shaped portion for receiving the driving element 32A is formed in the passive element 32B beforehand so that, by inserting the square-shaped driving element 32A into the roughly U-shaped portion, the driving element 32A can be engaged with the passive element 32B while the turning member 31 is attached to the boss 24.

Each variable vane 1 needs to be attached to the passive element 32B at an approximately fixed angle in order for the plurality of variable vanes 1 in the initial state to be aligned in a circumferential shape. In present embodiment, the reference surface 15 of the variable vane 1 mainly takes on the alignment action. Moreover, it is concerned that the turning member 31 merely being inserted to the boss 24 would cause the conveying member 32 to disengage when the turning member 31 is slightly separated from the turbine frame 2. In order to prevent the disengagement, a ring 33 or the like is provided from a side opposite to the turbine frame 2 to sandwich the turning member 31 and press the turning member 31 toward the side of the turbine frame 2.

As a result, when the engine runs at low speed, the turning member 31 of the variable mechanism 3 is turned appropriately so that the turning is conveyed to the shaft part 12 through the conveying member 32, whereby the variable vane 1 is turned as shown in Fig. 1(a) to appropriately throttle the exhaust gas G and regulate the flow rate of the exhaust gas.

An example of the exhaust gas guide assembly A applying the variable vane 1 according to the present invention is configured in the aforementioned manner. Now, the method for manufacturing the variable vane 1 as well as the method for manufacturing a press product will be described.

In the present invention, a metal material (hereinafter referred to as a preformed material W) to be the original form of the variable vane 1 is blanked from a sheet metal (hereinafter referred to as a strip material S) thinner than the diameter of the shaft part 12 (such as 4.5 mm). Here, the strip material S having a thickness of 2.6 mm is used as the starting material as an example. The thickness of the strip material S is not only smaller than the diameter of the shaft part 12 but preferably thick enough to realize the final form of the vane part 11 in the subsequent molding (die forging), namely, about as thickness as the maximum thickness of the vane part 11 (such as 2.4 mm). It is more preferred that the thickness of the strip material S be somewhat thicker than the maximum thickness of the vane part 11. In consideration of such preferences, the strip material S has a thickness of 2.6 mm in present embodiment.

As described above, the thickness of the strip material S has conventionally been based on the shaft part 12 thicker (greater) than the thickness of the vane part 11, where there has not been thought to accord with (base on) the vane part 11 that is thinner. It is thus one of the main characteristics of the present invention that the shaft part 12 can be formed to have a desired diameter by thickening at the time of molding the shaft part 12, even when the thickness of the strip material is in accordance with the vane part 11 that is smaller (thinner).

Moreover, the preformed material W is blanked while remaining in contact with a part of the strip material S. A method adopted in this case is what is called the progressive processing in which the preformed material W is blanked, transferred to the subsequent processing, and molded to near net shape (a state extremely close to the final product shape) while the tip of the shaft part 12 (the long shaft part 12a) of the preformed material W (the variable vane 1) remains in contact with the strip material S.

The variable vane 1 according to the present invention is processed from the preformed material W to the final product (the variable vane 1) by the following steps of (1) to (7).
(1) step of preparing a preformed material P1
(2) step of forging a shaft part P2
(3) step of trimming a shaft part P3
(4) step of forging a vane part P4
(5) step of trimming a vane part P5
(6) cutting step P6
(7) step of polishing in a barrel

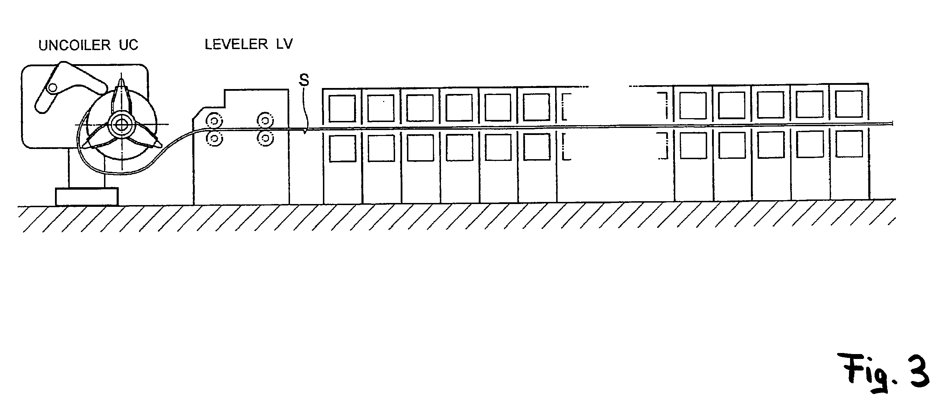

The progressive processing adopted in the present invention employs a line configuration for sequentially and continuously performing the steps (1) to (5) by a pair of opposed dies (mainly a press die) as shown in an example in Fig. 3, in which the preformed material W remaining in contact with the strip material S is passed along the processing line to be processed up to the near net shape. There are five steps of performing the progressive processing from the steps (1) to (5), whereas there are more than five opposed dies (processing stages) provided in Fig. 3 for the reason that one step is often divided into a plurality of the opposed dies (the processing stages) and that a previous processing stage is sometimes used to perform the processing more smoothly and accurately when performing a certain step (or a processing stage). A reference numeral UC in Fig. 3 indicates an uncoiler for uncoiling a wound coil strip material, and a reference numeral LV indicates a leveler for removing a wind or a warp from the uncoiled coil strip material. The strip material S refers to a flattened coil strip material obtained by performing the steps up to the step performed by the leveler LV on the wound coil strip material.

The aforementioned progressive processing generally has limitations such as a difficulty of processing the outer periphery of the preformed material W and a fact that the movement of the preformed material W is extremely limited in the middle of the processing line, thereby requiring an extremely sophisticated technique as a press die. The progressive processing however is extremely superior in mass productivity since a component of a relatively small size can be sent at high speed.

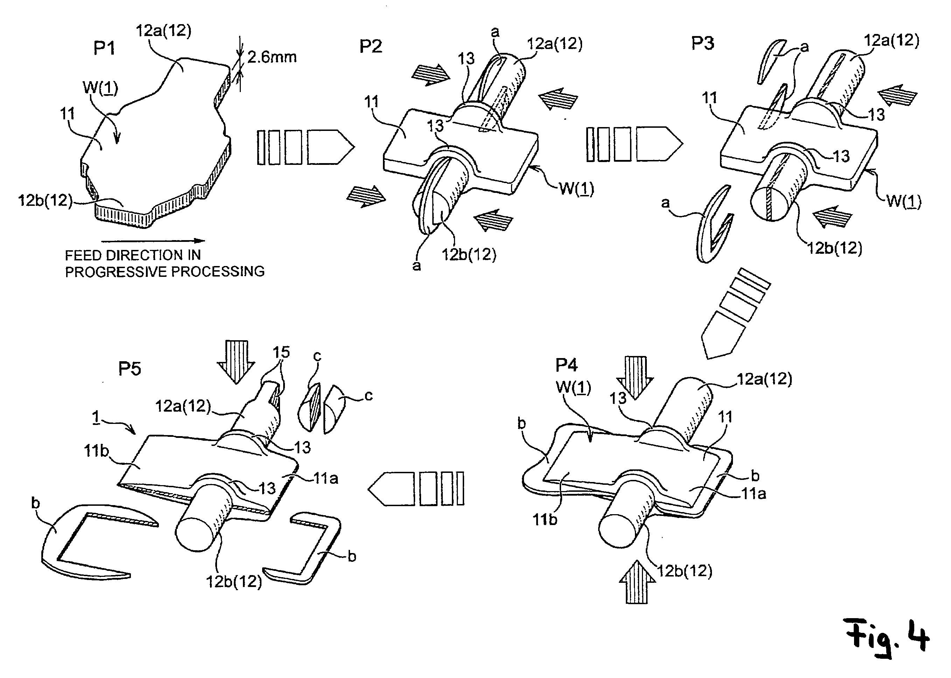

Each step will be further described with reference to Fig. 4.

### (1) step of preparing a preformed material P1

This step is performed to prepare the preformed material W (the original form of the variable vane 1) including the vane part 11 and the shaft part 12 in an integrated manner by blanking the preformed material W from the strip material S with the thickness of 2.6 mm, for example. The preformed material W is certainly blanked to have enough volume for realizing the target variable vane 1. In particular, the volume required for thickening the shaft part 12 needs to be secured beforehand as a width (a measurement in a feed direction of the strip material S) since the thickness of the strip material S being the starting material is smaller than the shaft diameter of the final product (4.5 mm in this case), whereby the preformed material is blanked with the width measurement greater than the shaft diameter of the final product. Accordingly, as shown in Fig. 4, the shaft part 12 of the blanked preformed material W is longish in the feed direction, which is herein referred to as a laterally long state or a punching orientation. The vane part 11 originally being flat is naturally punched out in the laterally long state that is longish in the feed direction.

The preformed material W is preferably blanked by fine blanking processing (hereinafter abbreviated as FB processing) known to be a precise punching method. The FB processing is a method of punching in a so-called zero clearance state in which the clearance of a tool is reduced to the minimum by applying high compressive force to a sheared edge of a material to be processed (the strip material S), whereby a cut surface of the preformed material can have an extremely smooth and satisfactory state throughout the thickness. Note that the term "fine blanking" generally refers to "precise punching". However, a "fine blanking processing machine (FB processing machine)" described herein performs not only "precise punching" but also various other processing using a fine blanking device (FB device) such as die forging (coining) and trimming. The coining refers to the light forging performed to smooth out the surface of the material to be processed (the preformed material W in this case) or improve the dimensional accuracy after forging (after molding the preformed material into a roughly desired shape).

Based on the operating environment of the variable vane 1, heat-resistant stainless steel or heat-resistant steel of an SUS or an SUH standard such as SUS310S, SUS304, or SUS316L is applied as the material for the strip material S (the preformed material W). It is generally more difficult to perform plastic processing on such high-Ni stainless steel material, thereby inevitably making the processing of present embodiment a highly difficult one.

### (2) step of forging a shaft part P2

This step is performed to form the shaft part 12 into a desired shape while mainly thickening the shaft part 12 of the blanked preformed material W. The brim part 13 is also molded in this step by bulging although it is omitted from the name of the step in which only the "shaft part" is included. An arrow filled with lines in Fig. 4 indicates a direction into which forging or trimming is applied to the preformed material W (a pressurizing direction).

The step of forging a shaft part P2 is performed to mold (form) the shaft part 12 into a desired shape by interposing the preformed material W (mainly the shaft part 12) between a pair of opposed dies of the FB device, for example. In this particular embodiment, as shown in Fig. 4, the preformed material W is pressed from a direction substantially orthogonal to the punching direction of the preformed material W (the direction being referred to as a direction orthogonal to punching) so as to mainly thicken the shaft part 12 and mold it into a round shape. The "direction orthogonal to punching" corresponds to the feed direction of the strip material S in the progressive processing. In normal progressive processing, however, a die in each processing stage moves in a vertical direction. Therefore, in the present invention adopting the progressive processing, the shaft part 12 is forged after the compression direction of the preformed material W is changed to the vertical direction by turning over the blanked preformed material W by 90 degrees with respect to the strip material S (changing the orientation so as to have the vane part 11 upright in the vertical direction) preceding the step of forging a shaft part P2.

### (3) step of trimming a shaft part P3

This step is performed to trim (cut) an unnecessary portion a such as flash and burr produced on the periphery (the edge) of the preformed material W when the shaft part 12 is thickened and molded in the preceding step of forging a shaft part P2.

Specifically, the unnecessary portion a is trimmed by interposing the preformed material W between the pair of opposed dies of the FB device, for example. The trimming improves compressive processability (moldability) of the shaft part 12 from another direction when it is processed in the subsequent step of forging a vane part P4. That is, the trimming performed in this step helps the material flow in the subsequent shaft part molding, thereby further ensuring that the near net shape is realized. On the contrary, when the final molding of the shaft part 12 is performed in the step of forging a vane part P4 by sending the preformed material W thereto without cutting off the burr or the like produced in the step of forging a shaft part P2, it is concerned that the burr or the like may impede the material flow and that the preformed material W would not be easily formed into the near net shape due to the low plastic deformability (the plastic fluidity) of the material itself.

This step is provided to trim the burr or the like produced on a mating surface of the opposed dies in the preceding processing, and thus the unnecessary portion a produced not only in the long shaft part 12a (on the outside) but in the short shaft part 12b (on the outside) would be cut off.

As it is understood from the description above, the processing direction (the direction from which the preformed material W is interposed) with respect to the preformed material W in the trimming step is also the direction orthogonal to punching.

### (4) step of forging a vane part P4

This step is performed to form mainly the vane part 11 of the preformed material W into a desired shape after the shaft part has been trimmed. For example, the preformed material W (mainly the vane part 11) is compressed and molded into a desired shape by interposing the preformed material W between the pair of opposed dies of the FB device from the punching direction. That is, the vane part 11 having the substantially fixed thickness is formed into the wing profile such that the thickness of the vane part gradually decreases from the thick front edge 11a to the thin rear edge 11b. Since the present invention has adopted the progressive processing, the forging is performed after turning back the preformed material W by 90 degrees (orienting the vane part 11 into a roughly horizontal state) or, in other words, changing the pressurizing direction into the vertical direction.

This step providing the final molding processing performs the final molding on the shaft part 12 and the brim part 13 in addition to the vane part 11. As a result, the shaft part 12 is pressed from the punching direction in this step in addition to the pressing from the direction orthogonal to punching in the preceding step of forging a shaft part P2, whereby it is anticipated that the shaft part 12 exhibits the effect of work hardening in its final state by being pressed from two different direction in the end. The work hardening can be effective in decreasing the frictional resistance between the shaft part 12 and the receiving hole 25 and improving the abrasion resistance of the shaft part 12, for example, when the shaft part 12 is inserted into the receiving hole 25 to slide the variable vane 1.

In addition, the brim part 13 is forged such that the material (thickness) of the shaft part 12 and the vane part 11 is bulged out. In normal die forging, the preformed material W needs simply be compressed (squashed) by the opposed die to practically obtain a product in accordance with the shape of a cavity formed in the opposed die. In the present embodiment, on the other hand, the brim part 13 thicker than the strip material S and larger than the shaft part 12 needs to be formed by bulging in the boundary between the vane part 11 and the shaft part 12. Therefore, in addition to simply compressing the preformed material W, in the present embodiment, the material flow is limited to the utmost in the longitudinal direction of the shaft part 12 while molding the vane part 11 and the shaft part 12, so that the brim part 13 is formed by bulging out the material in the boundary between the vane part 11 and the shaft part 12. The present embodiment thus requires extremely difficult forging in which the material flow different from the normal material flow needs to be considered at the time of forging. Another factor that makes the forging difficult is the applied material itself being the heat-resistant material on which the plasticity processing is not easily performed.

### (5) step of trimming a vane part P5

As shown in an example in Fig. 4, this step is performed to cut off an unnecessary portion b such as burr produced in the periphery (the edge) of the preformed material W in the preceding step of forging a vane part P4. In this trimming step, the reference surface 15 is also formed by cutting off an unnecessary portion c at the tip of the long shaft part 12a. The guide-in portion 16 is formed by the trimming as well.

Specifically, the vane part is trimmed by cutting off the unnecessary portions b and c while interposing the preformed material W between the pair of opposed dies of the FB device, for example. Since the present invention has adopted the progressive processing, separation of the preformed material W (such as the tip of the long shaft part 12a) from the strip material S is performed at the end of the step of trimming a vane part P5.

### (6) cutting step P6

This step is performed to cut mainly the shaft part 12 of the preformed material W after the aforementioned progressive processing is completed and includes the following stages.
(i) shaft end cutting
(ii) shaft center processing
(iii) shaft/vane processing

### (i) shaft end cutting

This stage is performed to cut both ends of the shaft part 12 to secure the lengths of the long shaft part 12a and the short shaft part 12b (the final product length). As shown in an example in Fig. 5, the ends of the both shaft parts 12 are cut by passing the preformed material W, the vane part of which has been trimmed, between a pair of rotating end mills EM. At this time, the lengths of the long shaft part 12a and the short shaft part 12b are based on the end face of the vane part 11 (the bearing surface of the brim part 13). In this stage of shaft end cutting, moreover, the narrowest part of the reference surface 15 is cut to form the guide-in portion 16 at the forefront of the long shaft part 12a.

Although shown in the present embodiment that the long shaft part 12a and the short shaft part 12b are cut simultaneously, the ends may also be cut one by one.

### (ii) shaft center processing

This stage is performed to process the center of the both shaft parts 12 of the preformed material W, specifically to center the both shaft parts 12 and drill (point) the centered position. As shown in an example in Fig. 6, a pair of chuckings 45 each having a V-shaped clamp part is applied to hold therebetween an arc surface of the both shaft parts 12 while avoiding a trim surface, detect the center position of the chucking 45 (the clamp part) as the center position of the shaft part 12, and drill the center position. The shaft part is chucked while avoiding the planar trim surface because, when held by the trim surface, the center position may not be detected accurately.

### (iii) shaft/vane processing

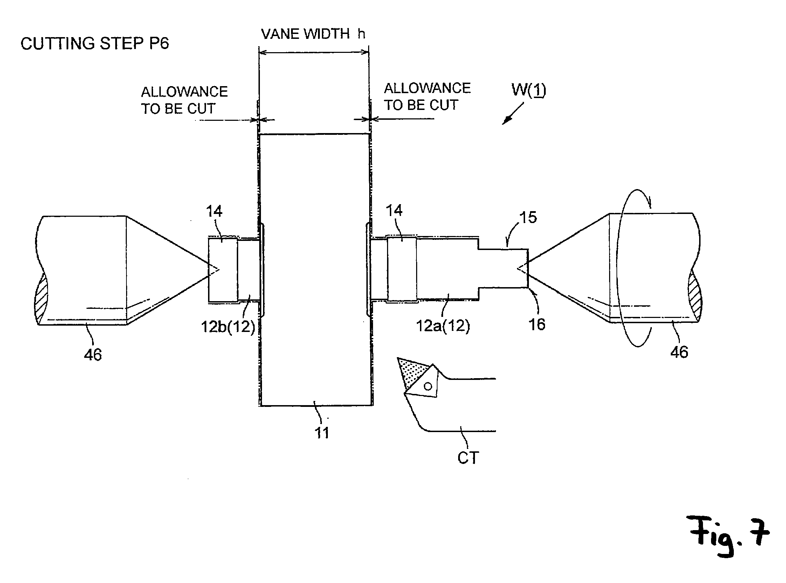

As shown in an example in Fig. 7, this stage is performed to cut the shaft part 12 and the vane part 11 by using a cutting tool CT while holding the drilled both shaft parts 12 (the center position) by a core holder 46 and rotating the preformed material W (the variable vane 1). At this time, the shaft part 12 is cut by a radius of approximately 0.15 mm, or a shaft diameter of approximately 0.3 mm, for example. The vane width h, the shaft diameter, the coaxiality of the both shaft parts and the like of the variable vane 1 in the preformed material W are completed by the cutting in this stage.

Moreover, the slide step 14 is provided to the both shaft parts 12 by the cutting in this stage, the slide step serving as a slide surface on which the frictional resistance is suppressed and allowing the variable vane 1 to turn smoothly when assembled.

### (7) step of polishing in a barrel

This step is performed to polish the surface of the variable vane 1 (the preformed material W) on the whole after the cutting step P7 by, for example, putting the variable vane 1 and an additive called a medium into a barrel and rotating or shaking the barrel such that the variable vane 1 and the medium collide with each other.

The variable vane 1 according to the present invention is manufactured in the aforementioned manner. Another press product (given the same reference numeral 1 as the variable vane) other than the variable vane 1 will now be described.

A press product 1 includes a flat part and a rod part in an integrated manner, where the flat part corresponds to the vane part 11 of the variable vane 1 while the rod part corresponds to the shaft part 12 of the variable vane 1. Accordingly, the flat part and the rod part will be given the same reference numerals as the parts of the variable vane 1 corresponding to the flat part and the rod part. Moreover, the "step of forging a shaft part P2" and the "step of trimming a shaft part P3" in the steps of manufacturing the variable vane 1 would be a "step of forging a rod part P2" and a "step of trimming a rod part P3" for the press product 1, respectively, and the "step of forging a vane part P4" and the "step of trimming a vane part P5" in the steps of manufacturing the variable vane 1 would be a "step of forging a flat part P4" and a "step of trimming a flat part P5" for the press product 1, respectively.

However, the press product 1 may differ from the variable vane 1 in that, for example, the flat part 11 may be formed to have a substantially fixed thickness in which the thickness does not necessarily change gradually as is the case from the thick front edge 11a to the thin rear edge 11b of the vane part 11 of the variable vane 1. Such flat part 11 may be a ring, a ring body of an eye bolt head, or a hook not necessarily connected to the ring body, for example.

The rod part 12 does not need to function as a rotational shaft for the flat part 11 in the final product state, whereby the cross sectional shape of the rod part does not need to be a circle but may be an ellipse, a rectangle or the like.

Moreover, the rod part 12 does not need to be compressed from two directions depending on the shape of the press product 1. When the flat part 12 has the substantially fixed thickness, for example, the rod part 12 needs only be compressed from the direction orthogonal to punching for thickening and does not need to be compressed thereafter from the punching direction.

### Industrial Applicability

The present invention is adapted to efficiently mass-produce the variable vane incorporated into the turbo charger used in the automobile engine or the like but is also suitable for manufacturing the press product including the flat part and the rod part in an integrated manner.

## Claims

1. A method for manufacturing a press product (1) that includes, in an integrated manner, a flat part (11) and a rod part (12) having a diameter greater than a thickness of the flat part (11), the method comprising steps of:
preparing (P1) a preformed material (W) by blanking a blank material, from a strip material (S) having a roughly fixed thickness smaller than the diameter of the rod part (12) but thicker than the thickness of the flat part (11), to be the preformed material (W) being an original form of the press product (1), the blank material being blanked in a punching direction by a width greater than the thickness of the strip material (S) in order to have enough volume to obtain a target press product (1);
**characterized by**
forging (P2) the rod part (12) in which the rod part (12) is formed into a desired shape while mainly thickening the rod part (12) by interposing the preformed material (W) between a pair of opposed dies and pressing mainly the rod part (12) from a direction roughly orthogonal to the punching direction; and
trimming (P3) the rod part (12) in which a first unnecessary portion (a) of the preformed material (W) is trimmed, the first unnecessary portion (a) hanging out of a product part as a result of the forging processing,
wherein the preformed material (W) remains in contact with a part of the strip material (S) to be passed along in progressive processing in which the steps of preparing (P1) the preformed material (W), forging (P2) the rod part (12), and trimming (P3) the rod part (12) are performed,
the step of forging (P2) the rod part (12) is performed upon turning over the preformed material (W) in a punching orientation by 90° with respect to the strip material (S) and changing orientation of the flat part (11) into a vertical direction, the preformed material (W) having been blanked in the step of preparing (P1) the preformed material (W), and
the subsequent step of trimming (P3) the rod part (12) is also performed while the flat part (11) is oriented in the vertical direction.

2. The method for manufacturing a press product (1) including a flat part (11) and a rod part (12) in an integrated manner according to claim 1, the method further comprising steps of, in addition to the steps of preparing (P1) the preformed material (W), forging (P2) the rod part (12), and trimming (P3) the rod part (12):
forging (P4) the flat part (11) in which mainly the flat part (11) is formed into a desired shape by interposing the preformed material (W) between a pair of opposed dies and pressing the preformed material (W) from the punching direction, the preformed material (W) having been processed in the step of trimming (P3) the rod part (12); and
trimming (P5) the flat part (11)in which a second unnecessary portion (b) of the preformed material (W) is trimmed, the second unnecessary portion (b) hanging out of a product part as a result of the forging processing,
wherein the step of forging (P4) the flat part is performed while the preformed material (W) is in the original punching orientation by turning back the preformed material (W) by 90° with respect to the strip material (S), and
the subsequent step of trimming (P5) the flat part (11) is also performed while the preformed material (W) is in the punching orientation.

3. A method for manufacturing a variable vane (1) to be incorporated into a VGS-type turbo charger, the variable vane (1) comprising:
a shaft part (12) to be a turning center; and
a vane part (11) for practically regulating a flow rate of exhaust gas (G), and
the VGS-type turbo charger allowing an engine to achieve high power output even when running at low speed by appropriately throttling relatively small amount of exhaust gas (G) exhausted from the engine, amplifying velocity of the exhaust gas, rotating an exhaust turbine (T) by using energy of the exhaust gas (G), and using a compressor directly connected to the exhaust turbine (T) to feed more air into the engine than the air being fed by natural aspiration,
wherein the vane part (11) and the shaft part (12) of the variable vane (1) correspond to the flat part (11)and the rod part (12), respectively, according to claim 1 or 2, and the variable vane (1) is manufactured by the manufacturing method according to claim 1 or 2.

4. The method for manufacturing a variable vane according to claim 3, wherein the variable vane (1) is of a double-shaft type having a long shaft (12a) and a short shaft (12b) part on both sides of the vane part (11), and a brim part (13) with a diameter greater than that of the shaft part (12) is formed between the vane part (11) and the shaft part (12).

## Patentansprüche

1. Verfahren zum Herstellen eines Pressteils (1), das integriert ein Flächenteil (11) und ein Stabteil (12) mit einem Durchmesser größer als eine Dicke des Flächenteils (11) enthält, wobei das Verfahren die folgenden Schritte aufweist:
Vorbereiten (P1) eines vorgeformten Materials (W) durch Stanzen eines Stanzmaterials, aus einem Bandmaterial (S) mit einer annähernd festen Dicke kleiner als der Durchmesser des Stangenteils (12), aber dicker als die Dicke des Flächenteils (11), welches das vorgeformte Material (W) sein soll, das eine Ursprungsform des Pressprodukts (1) ist, wobei das Stanzmaterial in einer Stanzrichtung um eine Breite größer als die Dicke des Bandmaterials (S) gestanzt wird, damit es genügend Volumen aufweist, um ein Endpressprodukt (1) zu erhalten;
**gekennzeichnet durch**
Schmieden (P2) des Stangenteils (12), bei dem der Stangenteil (12) in eine gewünschte Form gebracht wird, während hauptsächlich der Stangenteil (12) verdickt wird, **durch** Einfügen des vorgeformten Materials (W) zwischen einem sich gegenüberliegenden Gesenkpaar und Pressen vor allem des Stangenteils (12) aus einer Richtung annähernd orthogonal zur Stanzrichtung; und
Abgraten (P3) des Stangenteils (12), wobei ein erster unnötiger Abschnitt (a) des vorgeformten Materials (W) abgegratet wird, wobei der erste unnötige Abschnitt (a) aus einem Produktteil als Ergebnis der Schmiedeverarbeitung übersteht,
wobei das vorgeformte Material (W) mit einem Teil des Bandmaterials (S) in Kontakt bleibt, um beim fortschreitenden Bearbeiten weitergeführt zu werden, wobei die Schritte des Vorbereitens (P1) des vorgeformten Materials (W), des Schmiedens (P2) des Stanzteils (12) und Abgraten (P3) des Stangenteils (12) durchgeführt werden,
wobei der Schritt des Schmiedens (P2) des Stangenteils (12) durchgeführt wird auf ein Drehen des vorgeformten Materials (W) in eine Stanzausrichung um 90° mit Bezug auf das Bandmaterial (S) und ein Ändern der Ausrichtung des Flachteils (11) in eine Vertikalrichtung hin, wobei das vorgeformte Material (W) in dem Schritt des Vorbereitens (P1) des vorgeformten Materials (W) ausgestanzt worden ist, und
wobei der nachfolgende Schritt des Abgratens (P3) des Stangenteils (12), solange der Flachteil (11) in der vertikalen Richtung ausgerichtet ist, ebenfalls durchgeführt wird.

2. Verfahren zum Herstellen eines Pressprodukts (1), welches integriert ein Flachteil (11) und ein Stangenteil (12) enthält, gemäß Anspruch 1, wobei das Verfahren weiter zusätzlich zu den Schritten des Vorbereitens (P1) des vorgeformten Materials (W), des Schmiedens (P2) des Stangenteils (12) und Abgratens (P3) des Stangenteils (12) die folgenden Schritte aufweist:
Schmieden (P4) des Flachteils (11), wobei vor allem der Flachteil (11) in eine gewünschte Form gebracht wird durch Einfügen des vorgeformten Materials (W) zwischen ein sich gegenüberliegendes Gesenkpaar und Pressen des vorgeformten Materials (W) aus der Stanzrichtung, wobei das vorgeformte Material (W) im Schritt des Abgratens (P3) des Stanzteils (12) verarbeitet worden ist; und
Abgraten (P5) des Flachteils (11), wobei ein zweiter unnötiger Abschnitt (b) des vorgeformten Materials (W) abgegratet wird, wobei der zweite unnötige Abschnitt (b) aus einem Produktteil als ein Ergebnis der Schmiedeverarbeitung hervorsteht,
wobei der Schritt des Schmiedens (P4) des Flachteils durchgeführt wird, solange das vorgeformte Material (W) sich in der ursprünglichen Stanzausrichtung befindet, durch Zurückdrehen des vorgeformten Materials (W) um 90° mit Bezug auf das Bandmaterial (S), und
der nachfolgende Schritt des Abgratens (P5) des Flachteils (11) ebenfalls durchgeführt wird, solange das vorgeformte Material (W) sich in der Stanzausrichtung befindet.

3. Verfahren zum Herstellen einer verstellbaren Leitschaufel (1), die für den Einbau in einen Turbolader vom VGS-Typ bestimmt ist, wobei die verstellbare Leitschaufel (1) aufweist:
einen Wellenteil (12) und ein Drehzentrum; und
einen Leitschaufelteil (11) zum zweckmäßigen Regulieren einer Flussrate von Abgas (G), und
der Turbolader vom VGS-Typ es einem Motor ermöglicht, eine höhere Leistungsabgabe zu erreichen, selbst wenn er bei einer geringen Geschwindigkeit läuft, durch geeignetes Drosseln einer relativ kleinen Menge von Abgas (G), das vom Motor ausgestoßen wird, Verstärken der Geschwindigkeit des Abgases, Drehen einer Abgasturbine (T) durch Verwenden der Energie des Abgases (G) und Verwenden eines Kompressors, der direkt mit der Abgasturbine (T) verbunden ist, um mehr Luft in den Motor zu speisen als die Luft, die durch natürliche Ansaugung gespeist wird,
wobei der Leitschaufelteil (11) und der Wellenteil (12) der verstellbaren Leitschaufel (1) dem Flachteil (11) bzw. dem Stabteil (12) gemäß Anspruch 1 oder 2 entsprechen, und wobei die verstellbare Leitschaufel (1) mittels des Herstellverfahrens gemäß Anspruch 1 oder 2 hergestellt wurde.

4. Verfahren zum Herstellen einer verstellbaren Leitschaufel gemäß Anspruch 3, wobei die verstellbare Leitschaufel (1) vom Doppelwellentyp mit einem langen Wellenteil (12a) und einem kurzen Wellenteil (12b) auf beiden Seiten des Leitschaufelteils (11) ist, und ein Randteil (13) mit einem Durchmesser größer als dem des Wellenteils (12) zwischen dem Leitschaufelteil (11) und dem Wellenteil (12) ausgebildet ist.

## Revendications

1. Procédé destiné à fabriquer un produit de presse (1) incluant, de manière intégrée, une partie plate (11) et une partie formant tige (12) présentant un diamètre supérieur à une épaisseur de la partie plate (11), le procédé comprenant les étapes consistant à :
préparer (P1) un matériau préformé (W) par découpage à la presse d'un matériau brut, à partir d'un matériau en bande (S) présentant une épaisseur grossièrement fixée inférieure au diamètre de la partie formant tige (12), mais supérieure à l'épaisseur de la partie plate (11), pour servir de matériau préformé (W) qui sera une forme originale du produit de presse (1), le matériau brut étant découpé à la presse dans une direction de poinçonnage à raison d'une largeur supérieure à l'épaisseur du matériau en bande (S) afin de disposer d'un volume suffisant pour obtenir un produit de presse cible (1) ;
**caractérisé par**
le forgeage (P2) de la partie formant tige (12), où la partie formant tige (12) est façonnée dans une forme souhaitée tout en épaississant principalement la partie formant tige (12) en intercalant le matériau préformé (W) entre une paire de matrices opposées et en pressant principalement la partie formant tige (12) à partir d'une direction grossièrement orthogonale à la direction de poinçonnage, et
l'ébarbage (P3) de la partie formant tige (12), où une première portion inutile (a) du matériau préformé (W) est ébarbée, la première portion inutile (a) restant ainsi pendue à une partie de produit suite au traitement de forgeage,
dans lequel le matériau préformé (W) demeure en contact avec une partie du matériau en bande (S) à passer suivant un traitement progressif, où les étapes de préparation (P1) du produit préformé (W), de forgeage (P2) de la partie formant tige (12), et d'ébarbage (P3) de la partie formant tige (12) sont réalisées,
l'étape de forgeage (P2) de la partie formant tige (12) est réalisée en retournant le matériau préformé (W) suivant une orientation de poinçonnage à 90 ° par rapport au matériau en bande (S), et en changeant l'orientation de la partie plate (11) vers une direction verticale, le matériau préformé (W) ayant subi un découpage à la presse lors de l'étape de préparation (P1) du matériau préformé (W), et
l'étape subséquente d'ébarbage (P3) de la partie formant tige (12) est également réalisée alors que la partie plate (11) est orientée dans la direction verticale.

2. Procédé destiné à fabriquer un produit de presse (1) incluant une partie plate (11) et une partie formant tige (12) de manière intégrée selon la revendication 1, le procédé comprenant les étapes consistant en, outre les étapes de préparation (P1) du matériau préformé (W), de forgeage (P2) de la partie formant tige (12), et d'ébarbage (P3) de la partie formant tige (12) :
le forgeage (P4) de la partie plate (11), où la partie plate (11) est principalement façonnée en une forme souhaitée en intercalant le matériau préformé (W) entre une paire de matrices opposées et en pressant le matériau préformé (W) à partir de la direction de poinçonnage, le matériau préformé (W) ayant été traité lors de l'étape d'ébarbage (P3) de la partie formant tige (12), et
l'ébarbage (P5) de la partie plate (11), où une seconde portion inutile (b) du matériau préformé (W) est ébarbée, la seconde portion inutile (b) restant ainsi pendue à une partie de produit suite au traitement de forgeage,
dans lequel l'étape de forgeage (P4) de la partie plate (11) est réalisée alors que le matériau préformé (W) se trouve dans l'orientation de poinçonnage originale en retournant encore le matériau préformé (W) de 90 ° par rapport au matériau en bande (S), et
l'étape subséquente d'ébarbage (P5) de la partie plate (11) est également réalisée alors que le matériau préformé (W) se trouve dans la direction de poinçonnage.

3. Procédé de fabrication d'une aube variable (1) à intégrer dans un turbocompresseur de type VGS, l'aube variable (1) comprenant :
une partie d'arbre (12) pour faire office de centre de rotation, et
une partie d'aube (11) destinée à réguler de manière pratique un débit de gaz d'échappement (G), et
le turbocompresseur de type VGS permettant au moteur d'atteindre une puissance de sortie élevée, même lorsqu'il tourne à faible vitesse en étranglant de manière appropriée une quantité relativement petite de gaz d'échappement (G) s'échappant du moteur, en amplifiant la vitesse du gaz d'échappement, en faisant tourner une turbine d'échappement (T) en utilisant l'énergie du gaz d'échappement (G), et en utilisant un compresseur directement connecté à la turbine d'échappement (T) pour alimenter plus d'air dans le moteur que l'air alimenté par une aspiration naturelle,
dans lequel la partie d'aube (11) et la partie d'arbre (12) de l'aube variable (1) correspondent respectivement à la partie plate (11) et à la partie formant tige (12) selon la revendication 1 ou 2, et l'aube variable (1) est fabriquée par le procédé de fabrication selon la revendication 1 ou 2.

4. Procédé de fabrication d'une aube variable (1) selon la revendication 3, dans lequel l'aube variable (1) est de type à arbre double présentant une partie d'arbre long (12a) et d'arbre court (12b) sur les deux côtés de la partie d'aube (11), et une partie de bord (13) présentant un diamètre supérieur à celui de la partie d'arbre (12) est formée entre la partie d'aube (11) et la partie d'arbre (12).
